# FASCICULE DE BREVET EUROPEEN

(11) **EP 4 254 358 B1**
(45) Date de publication et mention de la délivrance du brevet: **02.07.2025**
(21) Numéro de dépôt: 23159030.8
(22) Date de dépôt: 28.02.2023
(51) Int. Cl.: G06V 20/52, G06V 10/10, G06V 10/25

(54) **PROCEDE DE COMPTAGE DE PERSONNES ET DE DETERMINATION DE LEUR POSITION DANS UN ESPACE**
VERFAHREN ZUM ZÄHLEN VON PERSONEN UND ZUR BESTIMMUNG DER POSITION IN EINEM RAUM
METHOD FOR COUNTING PERSONS AND DETERMINING THEIR POSITION IN A SPACE

(30) Priorité: 30.03.2022 FR 2202892
(43) Date de publication de la demande: 04.10.2023
(73) Titulaire: SCHNEIDER ELECTRIC INDUSTRIES SAS, 92500 Rueil-Malmaison (FR)
(72) Inventeur: VEUILLET, Pierre, 38500 Voiron (FR); PERSEGOL, Dominique, 38000 Grenoble (FR); PHARAM, Hector, 38000 Grenoble (FR)
(74) Mandataire: Schneider Electric

(56) Documents cités:
- US-A1- 2012 182 427
- US-A1- 2018 285 650
- KAELI DAVID ET AL: "Thermal image-based CNN's for ultra-low power people recognition", 8 May 2018 (2018-05-08), New York, NY, USA, pages 326 - 331, XP055966033, ISBN: 978-1-4503-5761-6, Retrieved from the Internet <URL:https://dl.acm.org/doi/pdf/10.1145/3203217.3204465> DOI: 10.1145/3203217.3204465

## Description

### Domaine technique

La présente divulgation relève du domaine des procédés de comptage de personnes et de détermination de la position de ces personnes dans un espace d'un bâtiment.

### Technique antérieure

Dans la gestion de bâtiments, il est connu d'employer un dispositif d'enregistrement vidéo afin de mettre en oeuvre des procédés de comptage de personnes et de détermination de leur position dans un espace d'un bâtiment. Par exemple, le dispositif d'enregistrement vidéo peut être un imageur thermique qui génère des vidéos permettant d'identifier chaque personne présente dans l'espace par sa différence de température vis-à-vis des autres corps présents dans cet espace.

Généralement, l'imageur thermique est configuré pour enregistrer en permanence des vidéos d'une scène de cet espace et, seulement à certains moments, entrer dans un mode veille lors duquel il reste allumé sans faire d'enregistrement. Un tel imageur thermique est donc très énergivore, de sorte que son fonctionnement est très coûteux. De plus, la forte consommation d'énergie implique que l'imageur thermique doit être alimenté électriquement par des câbles, l'utilisation de batteries ne garantissant pas l'autonomie de l'imageur thermique sur une longue période.

Par ailleurs, l'enregistrement de vidéos ne devrait avoir lieu que lorsque l'imageur est thermiquement stable, c'est-à-dire, lorsque la température de l'imageur est constante tout au long de l'enregistrement. En effet, si lors de l'enregistrement de vidéos, la température de l'imageur fluctue, les différences de température entre les différents corps de l'espace sont biaisées, augmentant ainsi le risque d'identifier un nombre inexact de personnes dans l'espace. Classiquement, la stabilité thermique de l'imageur au début de l'enregistrement vidéo est obtenue en attendant environ 10 secondes après l'allumage de l'imageur thermique, ce qui représente une perte de temps et d'énergie non négligeable. De surcroit, ceci n'empêche pas les variations de température de l'imageur pendant l'enregistrement, ces variations pouvant être dues à une variation de la température ambiante ou à un auto-échauffement de l'imageur, entre autres.

US 2018/285650 A1 décrit un système de détection d'occupation permettant de détecter la présence humaine et de déterminer le nombre d'occupants à l'aide d'images thermiques.
US 2012/182427 A1 décrit un système et une méthode de reconnaissance thermique du genre de personnes dans tout lieu de divertissement, de loisirs et/ou de détente.
Kaeli David ET AL: "Thermal image-based CNN's for ultra-low power people recognition", Proceedings of the 15th ACM International Conference on Computing Frontiers, 8 mai 2018, pages 326-331, DOI: 10.1145/3203217.3204465, ISBN: 978-1-4503-5761-6, décrit un système de comptage de personnes utilisant des réseaux de neurones convolutifs (CNN) optimisés pour fonctionner sur des dispositifs à très faible consommation énergétique, en s'appuyant sur des images thermiques.

### Résumé

La présente divulgation vient améliorer la situation.

A cet effet, il est proposé un procédé selon la revendication 1.

Grâce à la désactivation de l'imageur thermique avant l'étape d'obtention de l'image thermique calibrée, le temps pendant lequel l'imageur est activé est très court, ce qui permet d'économiser de l'énergie et d'obtenir un procédé de comptage de personnes et de détermination de leur position peu couteux en énergie. Ceci permet en outre d'utiliser, pour la mise en oeuvre de ce procédé, un imageur thermique alimenté électriquement par une batterie tout en garantissant qu'il a une autonomie suffisamment longue, notamment supérieure à 10 ans.

Enfin, le temps pendant lequel l'imageur thermique est activé étant très court, il n'y a pas besoin d'attendre que l'imageur soit stable thermiquement pour la capture de l'image thermique brute.

Selon un autre aspect, l'étape e) comprend la soustraction de l'image thermique calibrée de comparaison à l'image thermique calibrée de la scène de sorte à maintenir dans l'image thermique calibrée de la scène l'au moins une région d'intérêt.

Selon un autre aspect, le procédé comprend en outre, préalablement à l'étape e), l'application d'au moins un filtre d'identification de personnes à l'image thermique calibrée de la scène pour identifier l'au moins une région d'intérêt parmi l'au moins une zone chaude.

Selon un autre aspect, un temps écoulé entre l'étape a) et l'étape c) est inférieur à 1 s, de préférence inférieur à 50 ms, de préférence encore inférieur ou égal à 20 ms.

Selon un autre aspect, l'image thermique calibrée de comparaison est obtenue entre 1 min et 4 min avant l'étape a), de préférence entre 1 min et 2 min avant l'étape a).

Selon un autre aspect, l'image thermique calibrée de la scène est obtenue sans actionnement d'un obturateur de l'imageur thermique.

Selon un autre aspect, le procédé comprend en outre l'obtention d'une autre image thermique calibrée de comparaison à partir de la soustraction des régions d'intérêt de l'image thermique calibrée.

Selon un autre aspect, il est proposé un imageur thermique selon la revendication 8.

Selon un autre aspect, il est proposé un détecteur domotique comprenant l'imageur thermique décrit ci-avant.

### Brève description des dessins

D'autres caractéristiques, détails et avantages apparaîtront à la lecture de la description détaillée ci-après, et à l'analyse des dessins annexés, sur lesquels :
**Fig. 1**

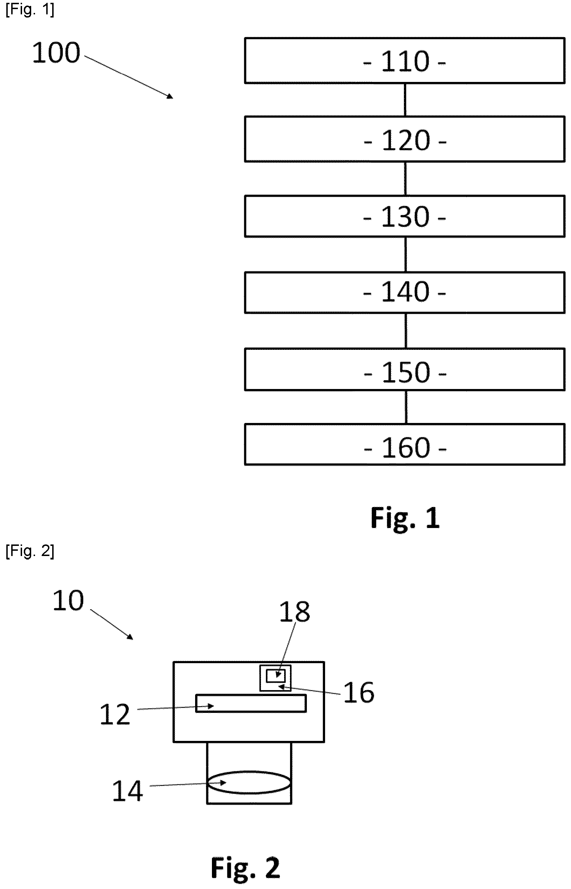

   [Fig. 1] montre un logigramme d'un procédé de comptage de personnes et de détermination de la position desdites personnes dans un espace d'un bâtiment selon un mode de réalisation.
**Fig. 2**
   [Fig. 2] montre une vue schématique en coupe longitudinale d'un exemple d'imageur thermique pour mettre en œuvre le procédé de la figure 1.
**Fig. 3**

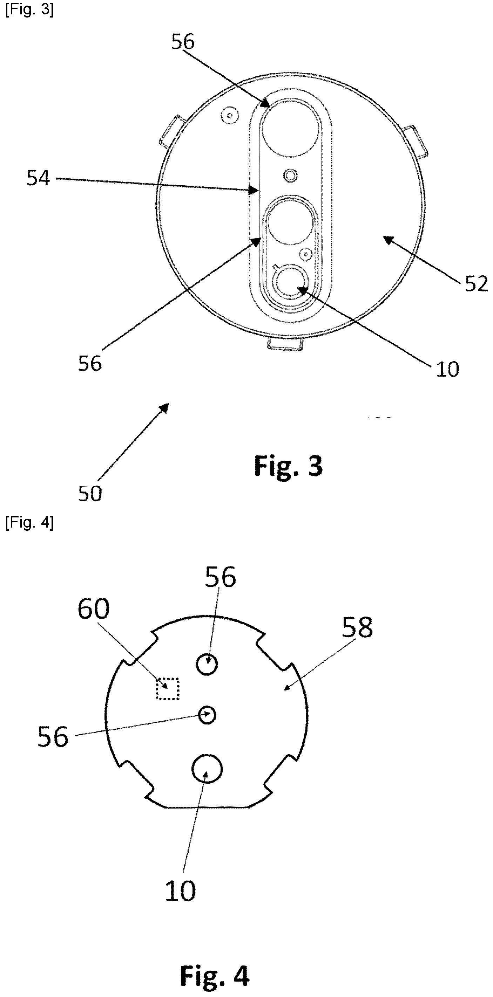

   [Fig. 3] montre une vue schématique frontale d'un détecteur domotique comprenant l'imageur thermique de la figure 2.
**Fig. 4**
   [Fig. 4] montre une vue schématique frontale d'une carte électronique du détecteur domotique de la figure 3.
**Fig. 5**

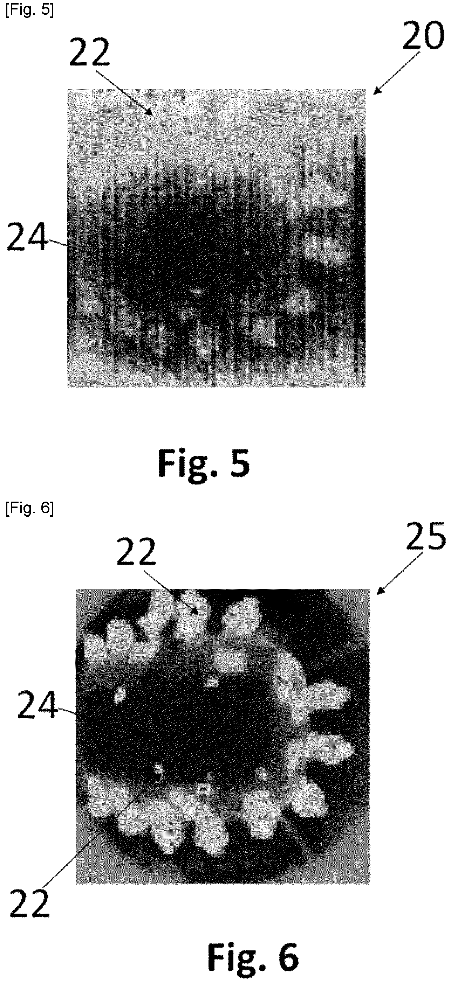

   [Fig. 5] montre une image thermique brute d'une scène de l'espace obtenue lors de l'application du procédé de la figure 1.
**Fig. 6**
   [Fig. 6] montre une image thermique calibrée obtenue par application de l'une des étapes du procédé de la figure 1 à l'image thermique brute de la figure 5.
**Fig. 7**

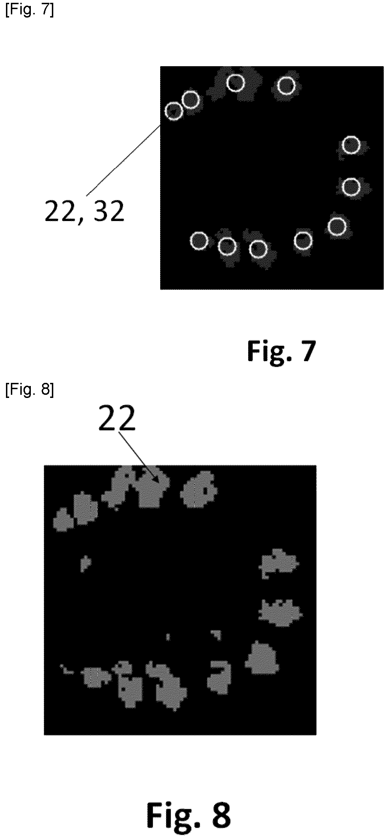

   [Fig. 7] est une image montrant des régions d'intérêt de l'image thermique calibrée de la figure 6.
**Fig. 8**
   [Fig. 8] est une image montrant des zones chaudes de l'image thermique calibrée de la figure 6.
**Fig. 9**

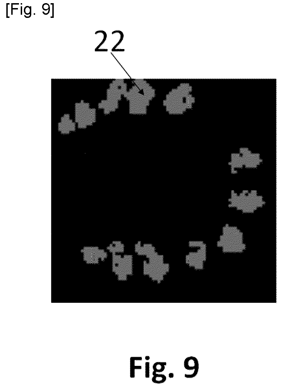

   [Fig. 9] est une image obtenue après l'application d'un filtre à l'image de la figure 8.

### Description des modes de réalisation

Maintenant sera décrit en référence à la figure 1 un procédé 100 de comptage de personnes et de détermination de la position de ces personnes dans un espace d'un bâtiment.

Par « bâtiment », on entend toute construction immobilière, telle qu'un immeuble, un appartement, un bureau, etc. L'espace du bâtiment peut être une partie intérieure du bâtiment, par exemple une pièce ou une zone d'une pièce, ou une partie extérieure du bâtiment, par exemple un balcon, une cour ou un jardin.

Le procédé 100 comprend une première étape d'activation 110 d'un imageur thermique 10, visible sur la figure 2.

Comme il va être détaillé, l'imageur thermique 10 est configuré pour capturer une image thermique brute d'une scène comprise dans l'espace du bâtiment. La scène peut comprendre la totalité de l'espace choisi du bâtiment ou une partie de cet espace. Par « image brute » on entend une image de la scène qui n'a pas fait l'objet de post-traitement ou de calibration.

L'imageur thermique 10 est par exemple un imageur thermique infrarouge. Dans ce cas, l'imageur 10 est configuré pour obtenir l'image thermique brute à partir de l'absorption du rayonnement infrarouge émis par les différents corps présents dans la scène. Par « corps » on entend tout être vivant ou tout objet présent dans la scène. Ainsi, le corps peut être une personne, un animal, une plante, un dispositif électronique, un meuble ou un mur compris dans la scène, entre autres.

Selon un exemple non limitatif, l'imageur thermique 10 comprend un ensemble de capteurs élémentaires thermiques 12, également appelés capteurs infrarouges, et une lentille 14.

Un capteur infrarouge est configuré pour absorber le rayonnement infrarouge émis par les corps présents dans la scène. Le rayonnement infrarouge absorbé par l'ensemble de capteurs 12 provoque la variation d'une grandeur physique au niveau de chaque capteur infrarouge qui est fonction de la quantité de rayonnement infrarouge absorbé. De manière connue, plus la température d'un corps est élevée, plus ce corps émet du rayonnement infrarouge, ce qui augmente la quantité de rayonnement infrarouge absorbé par le capteur infrarouge. Le capteur infrarouge génère ainsi des signaux différents en fonction de la température de chaque corps présent dans la scène.

Chaque capteur infrarouge est par exemple un capteur imagerie infrarouge à ondes longues, ce qui permet de capter le rayonnement infrarouge émis par chaque corps même en absence de lumière.

Avantageusement, les capteurs infrarouges de l'ensemble 12 sont organisés de manière matricielle selon n lignes et n colonnes.

Les capteurs infrarouges sont par exemple des bolomètres. Dans un bolomètre ou un microbolomètre, les signaux pour obtenir l'image thermique brute sont générés par le capteur 12 à partir d'une variation de sa résistance électrique. En particulier, l'échauffement du capteur 12 provoqué par l'absorption de rayonnement infrarouge fait varier la résistance électrique du capteur 12. La valeur de variation de résistance électrique est associée à des températures spécifiques.

Alternativement, les capteurs infrarouges de l'ensemble 12 peuvent être des capteurs pyroélectriques ou des capteurs pneumatiques.

Dans le cas d'un capteur pyroélectrique, l'échauffement du capteur provoqué par l'absorption du rayonnement infrarouge génère des courants de surface dans le capteur qui sont directement proportionnels à l'augmentation de température.

Dans le cas d'un capteur pneumatique, le rayonnement infrarouge absorbé génère une augmentation de température à l'intérieur d'une chambre remplie d'un gaz. La pression du gaz dans le capteur augmente en fonction de l'augmentation de la température dans la chambre.

Selon une autre variante, les capteurs infrarouges peuvent être des capteurs thermopiles.

Les signaux générés par l'ensemble de capteurs thermiques 12 dépendent donc de la température de chaque corps dans la scène S.

Avantageusement, l'ensemble de capteurs 12 fonctionne à température ambiante. L'imageur thermique 10 est donc un imageur thermique non refroidi.

De préférence, l'imageur thermique 10 est un imageur démuni d'obturateur, sans que ceci soit limitatif. L'obturateur est une pièce mécanique qui est disposée devant l'ensemble de capteurs thermiques 12 et qui peut se déplacer entre une position de service de l'imageur thermique 10 et une position d'obturation de l'imageur thermique 10. Ce déplacement est commandé par un moteur, notamment électrique. Dans la position de service, l'imageur thermique 10 peut obtenir l'image thermique brute de la scène comme expliqué ci-avant. Dans la position d'obturation, l'obturateur s'interpose entre les capteurs de l'ensemble 12 et les corps de la scène, de sorte que l'absorption du rayonnement infrarouge émis par les corps présents dans la scène est impossible et l'image thermique brute de la scène ne peut pas être générée. Au lieu de cela, dans la position d'obturation de l'obturateur, l'imageur thermique 10 génère une image de référence relative à la température de l'imageur, qui est donc une image uniforme en température.

Un dispositif informatique 16 peut également être agencé dans l'imageur thermique 10. Le dispositif 16 fonctionne indépendamment de l'état d'activation ou de désactivation de l'imageur thermique 10. Par « désactivation » (également appelé « powering off » en anglais) on entend qu'on coupe l'alimentation électrique de l'imageur thermique 10.

Même si sur l'exemple de la figure 2, le dispositif informatique 16 est intégré dans l'imageur thermique 10, il pourrait être un dispositif externe connecté à l'imageur thermique 10. Le dispositif informatique 16 comprend un processeur 18. Le processeur 18 intervient dans la mise en oeuvre des étapes 120 et 140 à 160 du procédé 100 qui vont être expliquées par la suite.

L'imageur thermique 10 est disposé en un point élevé au-dessus du sol de l'espace, notamment à une hauteur qui lui permet d'être au-dessus de toute personne présente dans l'espace. Par exemple, la hauteur d'installation de l'imageur thermique 10 est supérieure ou égale à 2,2 m. Dans le cas d'un espace intérieur, l'imageur thermique 10 est par exemple installé au plafond. Dans le cas d'un espace extérieur, l'imageur thermique peut être installé contre un mur délimitant l'espace ou sur un point haut d'un élément haut compris dans l'espace, par exemple un lampadaire.

Dans certains cas, l'imageur thermique 10 est intégré dans un détecteur domotique 50, visible sur la figure 3. Le détecteur domotique 50 comprend un boitier 52 à l'intérieur duquel l'imageur thermique 10 est agencé.

Sur la figure 3, l'imageur thermique 10 est inclus dans un module de capteurs 54. Le module de capteurs 54 peut comprendre en outre une pluralité de capteurs 56 de différentes natures. Par exemple, les capteurs 56 peuvent être un capteur de bruit ambiant, un capteur de luminosité ambiante, etc. Avantageusement, l'un des capteurs 56 du détecteur domotique est un capteur de mouvement, notamment un capteur infrarouge passif, aussi appelé « capteur PIR » (par ses sigles en anglais « passive infrared »). Le capteur PIR est configuré pour détecter la variation de rayonnement infrarouge qui a lieu lorsqu'une personne se déplace dans l'espace. Pour cela, le capteur PIR capte la différence de température existant entre le corps humain et le sol, les murs et autres corps présents dans l'espace.

Comme représenté sur la figure 4, l'imageur thermique 10 et les capteurs 56 peuvent être soudés sur une carte électronique 58 du détecteur domotique 50. Cette carte électronique 58 est agencée à l'intérieur du boitier 52. La carte électronique 58 permet de récupérer les différents signaux émis par l'imageur thermique 10 (le dispositif informatique 16 inclus) et les capteurs 56. La carte électronique 58 permet également d'alimenter électriquement les capteurs 56, l'imageur 10 et le dispositif informatique 16.

Le détecteur domotique 50, et notamment sa carte électronique 58, peuvent être alimentés électriquement par un câble ou par une batterie.

De préférence, l'imageur thermique 10 et le détecteur domotique sont à faible consommation énergétique. A cet effet, l'imageur thermique 10 a par exemple une basse résolution. Par « basse résolution » on entend ici une résolution comprise entre 20x20 pixels et 150x150 pixels, de préférence entre 32x32 pixels et 100x100 pixels.

L'activation 110 de l'imageur thermique 10 peut être réalisée à distance ou par actionnement direct d'une interface homme-machine prévue sur l'imageur 10 ou sur le détecteur domotique 50.

Le procédé 100 comprend ensuite une étape de capture 120 de l'image thermique brute de la scène de l'espace, comme indiqué précédemment.

Comme déjà expliqué, l'imageur thermique 10 est configuré pour obtenir l'image thermique brute à partir de l'absorption par l'ensemble 12 de capteurs thermiques du rayonnement infrarouge émis par les différents corps présents dans la scène. Chaque capteur thermique génère ainsi des signaux qui sont transmis au dispositif informatique 16 de l'imageur 10. Le processeur 18 traite ces signaux pour générer l'image thermique brute. La figure 5 montre un exemple d'image thermique brute 20.

Toute image thermique comprend une pluralité de pixels. Chaque pixel représente un point de température spécifique d'un corps présent dans la scène. En fonction de la température du point respectif, chaque pixel de l'image thermique peut être représenté par une tonalité chromatique spécifique. Cette tonalité chromatique peut être associée à une valeur précise de température ou à une plage de températures. Aussi, l'image thermique comprend des zones claires 22 et des zones sombres 24 qui aident à identifier les différentes sources de chaleur présentes dans la scène.

Toutefois, comme il ressort clairement de la figure 5, dans l'image thermique brute les limites des zones claires 22 et les zones sombres 24 sont floues. L'image thermique brute révèle le positionnement de chaque capteur de l'ensemble 12, et plus particulièrement une non-uniformité (« effet de pixellisation ») due à la différence de signaux générés par chaque capteur. Par ailleurs, l'image thermique brute présente un aspect colonnaire. Aussi, l'image thermique brute ne permet pas d'obtenir des informations fiables sur les températures associées à chaque pixel de l'image. Par conséquent, l'image brute 20 n'est pas exploitable en l'état et nécessite un traitement additionnel comme il va être détaillé ci-après.

Lors de la capture 120 de l'image thermique brute 20, une mesure de la température de l'imageur thermique 10 est réalisée. A cet effet, l'imageur thermique est relié à un capteur de température 60. Selon un exemple non limitatif, le capteur de température 60 peut être agencé sur la carte électronique 58 du détecteur domotique 50. En particulier, comme représenté sur la figure 4, le capteur de température 60 peut être disposé sur une face de la carte électronique 58 opposée à la face sur laquelle l'imageur thermique est soudé. La mesure de la température de l'imageur thermique 10 est avantageusement réalisée sensiblement en même temps que la capture de l'image thermique brute 20.

Après avoir capturé l'image thermique brute, le procédé 100 comprend la désactivation 130 de l'imageur thermique 10. Le désactivation 130 de l'imageur thermique 10 peut être réalisée à distance ou par actionnement direct de l'interface homme-machine prévue sur l'imageur 10 ou sur le détecteur domotique 50.

Cette désactivation 130 intervient de préférence immédiatement après la capture 120 de l'image thermique brute 20. Aussi, un temps écoulé entre l'activation 110 et la désactivation 130 de l'imageur thermique 10 est très court. Par exemple, le temps écoulé entre l'activation 110 et la désactivation 130 de l'imageur thermique est inférieur à 1 s, de préférence inférieur à 50 ms, de préférence encore inférieur ou égal à 20 ms.

La désactivation de l'imageur 10 permet d'une part d'économiser de l'énergie, car le temps pendant lequel l'imageur thermique 10 est activé est très limité. Par ailleurs, ce temps étant très court, il n'est pas nécessaire d'attendre que l'imageur thermique 10 atteigne la stabilisation thermique afin de pouvoir capturer l'image thermique brute 10, et le risque de variations thermiques dans l'imageur 10 pendant la capture 120 de l'image est très faible. En effet, avec un temps d'activation de l'imageur 10 court, celui-ci n'a pas le temps de s'auto-échauffer lors de la capture 120 de l'image thermique brute 20, et la température ambiante ne risque pas non plus d'être modifiée. La mesure de la température de l'imageur thermique 10 par le capteur de température 60 tel qu'expliqué ci-avant suffit donc pour obtenir une image thermique calibrée comme il va être détaillé.

Le procédé 100 comprend une étape d'obtention 140 d'une telle image thermique calibrée. Cette étape d'obtention 140 de l'image thermique calibrée intervient de préférence après la désactivation 130 de l'imageur thermique 10.

Lors de l'étape 140, on applique à l'image thermique brute 20 un algorithme de calibration d'images thermiques. Un tel algorithme permet d'obtenir l'image thermique calibrée, laquelle est compensée en température ainsi qu'exempte d'effet de pixellisation et d'aspect colonnaire. Par « compensée en température » on entend ici que l'algorithme de calibration tient compte de la température de l'imageur thermique 10 mesurée par le capteur 60 lors de la capture 120 de l'image thermique brute 20. Ceci permet d'obtenir une image thermique calibrée sur laquelle la présence de zones claires et de zones sombres est indépendante de la température de l'imageur thermique 10. Par ailleurs, la prise en compte de la température de l'imageur thermique 10 permet d'obtenir une température précise pour chaque pixel de l'image thermique brute 20.

Des exemples d'algorithmes de calibration qui peuvent être employés lors de l'étape 140 du présent procédé sont décrits dans les demandes de brevet FR 3 111 699 A1, FR 3 083 901 A1 ou FR 3 088 512 A1. Ces algorithmes utilisent des charges de calcul faibles, ce qui permet de réduire l'énergie et le temps nécessaires pour leur mise en oeuvre. En particulier, ces algorithmes permettent l'obtention de l'image thermique calibrée en un temps inférieur à 50 ms, par exemple en 10 ms. Par ailleurs, ces algorithmes sont des algorithmes sans obturateur, plus généralement connus sous le nom d'algorithmes « shutterless » (terme anglais signifiant « sans obturateur »). Un tel algorithme sans obturateur est un algorithme qui permet la calibration de l'image thermique brute sans besoin de générer l'image de référence relative à la température de l'imageur décrite précédemment. Aussi, ces algorithmes peuvent être utilisés pour obtenir l'image thermique calibrée à partir d'un imageur thermique sans obturateur, ce qui permet de réduire l'encombrement de l'imageur employé. De plus, même si l'imageur thermique est muni d'un obturateur, avec ces algorithmes il n'est pas nécessaire d'actionner le moteur électrique de l'obturateur pour que celui-ci passe de la position de service à la position d'obturation de l'imageur thermique 10. La consommation énergétique est donc diminuée grâce à ces algorithmes sans obturateur.

La figure 6 montre une image thermique calibrée 25 obtenue pour l'image thermique brute de la figure 5. Comme il ressort de cette figure 6, dans l'image thermique calibrée 25 les zones claires 22 et les zones sombres 24 sont clairement délimitées, de sorte qu'il est possible d'obtenir des informations fiables sur les températures associées à chaque pixel de l'image thermique calibre 25. Les différents corps présents dans la scène peuvent donc être distingués en fonction de leur température et/ou de leur forme.

Sur l'image 25 de la figure 6, les zones claires 22 correspondent à des corps dont la température est dans une plage de températures donnée, dite plage de températures de référence, tandis que les zones sombres 24 correspondent à des corps dont la température est extérieure à la plage de températures de référence. Par souci de clarté, dans ce qui suit les zones claires 22 seront aussi appelées « zones chaudes », et les zones sombres 24 seront aussi appelées « zones froides ». On note toutefois que cette correspondance zones chaudes/zones claires et zones froides/zones sombres n'est pas limitative. On note également que la température des zones froides 24 est généralement inférieure à la température des zones chaudes 22, mais le contraire est aussi possible. Autrement dit, la température des zones froides peut être soit en dessous de la borne inférieure de la plage de températures de référence, soit au-dessus de la borne supérieure de la plage de températures de référence.

La plage de températures de référence correspond ici à la plage de températures dans laquelle peut se situer la température d'une personne présente dans la scène. Toute personne présente dans la scène apparait donc sur l'image thermique calibrée comme une zone chaude 22. Dans ce qui suit, les zones chaudes 22 occupées par des personnes seront appelées « régions d'intérêt ». La température d'une personne dans la scène peut varier par exemple entre 20°C et 40°C en fonction de la tenue vestimentaire de la personne.

Le procédé 100 comprend ensuite une étape de comparaison 150 de l'image thermique calibrée 25 à une image thermique calibrée de la même scène obtenue préalablement, qu'on appelle ici « image thermique calibrée de comparaison ».

L'image thermique calibrée de comparaison est en particulier une image thermique calibrée obtenue par l'imageur thermique 10 lors d'une application du procédé 100 antérieure, notamment à un instant t0, et dans laquelle les régions d'intérêt identifiées à l'instant t0 ont été supprimées. L'instant t0 a lieu par exemple entre 1 min et 4 min avant l'étape d'activation 110 de l'imageur thermique 10, de préférence entre 1 min et 2 min avant cette étape d'activation 110. Autrement dit, l'image thermique calibrée de comparaison est une image thermique calibrée obtenue par l'imageur thermique 10 lors de l'application à l'instant t0 du procédé 100 dans laquelle uniquement les zones chaudes qui ne correspondaient pas à des personnes à cet instant t0 ont été maintenues. Selon un exemple, l'image thermique calibrée de comparaison est obtenue 2 min avant l'activation 110 de l'imageur thermique 10. Un tel décalage de temps entre l'image thermique calibrée et l'image thermique calibrée de comparaison permet de suivre de manière régulière l'évolution des zones chaudes 22 dans la scène, tout en évitant de consommer des quantités d'énergie très importantes. L'image thermique calibrée de comparaison peut être stockée transitoirement dans le dispositif informatique 16.

L'image thermique calibrée de comparaison a un aspect similaire à l'image thermique calibrée 25. En particulier, l'image thermique calibrée comprend également des zones chaudes et des zones froides. Avantageusement, comme indiqué ci-dessus, l'image thermique calibrée de comparaison ne comprend pas de régions d'intérêt. Par souci de clarté, dans ce qui suit, les zones chaudes et froides de l'image thermique calibrée de comparaison seront appelées respectivement « zones chaudes de comparaison » et « zones froides de comparaison ».

La comparaison 150 entre l'image thermique calibrée et l'image thermique calibrée de comparaison comprend la soustraction de l'image thermique calibrée de comparaison et de l'image thermique calibrée 25. Plus précisément, l'image thermique calibrée de comparaison est soustraite de l'image thermique calibrée 25.

Comme indiqué précédemment, toute personne présente dans la scène apparait sur l'image thermique calibrée 25 comme une zone chaude 22. Toutefois, d'autres corps ayant une température comprise dans la plage de températures de référence, tel un appareil électronique en service, peuvent se trouver dans la scène. Par conséquent, de tels corps apparaissent également comme zones chaudes 22 sur l'image thermique calibrée 25. La soustraction de l'image thermique calibrée de comparaison de l'image thermique calibrée 25 permet de supprimer de l'image thermique calibrée 25 les zones chaudes 22 qui étaient déjà présentes dans la scène à l'instant t0 et qui n'étaient pas des régions d'intérêt. La soustraction de l'image thermique calibrée et l'image thermique calibrée de comparaison permet ainsi d'identifier parmi les zones chaudes 22 de l'image thermique calibrée 25, celles qui correspondent à des régions d'intérêt 32 (Fig. 7) telles que définies ci-avant.

Afin d'améliorer la précision dans la détermination des régions d'intérêt 32, plusieurs filtres de détection de personnes peuvent être appliquées sur l'image thermique calibrée 25. De tels filtres permettent en particulier d'identifier une zone chaude 22 apparue dans la scène au moment de la génération de l'image thermique calibrée 25 par rapport à l'image thermique de comparaison et qui ne correspond pas à une région d'intérêt 32.

Le filtre de détection de personnes peut être un filtre de taille permettant d'éliminer de l'image thermique calibrée les zones chaudes 22 de petite taille. De telles zones correspondent aux zones chaudes 22 dont le nombre de pixels est inférieur à une valeur seuil correspondant au nombre minimal de pixels qui est d'ordinaire associé à une personne. L'effet d'un tel filtre est apprécié sur les figures 8 et 9. En effet, sur l'image de la figure 8, certaines zones chaudes (qui comme indiqué, correspondent aux zones claires) ont une taille plus petite que les autres zones chaudes 22. Après l'application du filtre de taille, ces zones chaudes plus petites sont supprimées de l'image thermique calibrée, comme visible sur la figure 9.

Le filtre de détection de personnes peut être aussi un filtre permettant d'identifier les personnes en fonction des différences de température entre les pixels des zones chaudes 22. On sait que, généralement, la tête d'une personne est plus chaude que le reste du corps. Aussi, lorsqu'un nombre déterminé de pixels de la zone chaude 22 a une température supérieure au reste de pixels de la zone chaude, la zone chaude correspond potentiellement à une personne.

Tous ces types de filtres présentent l'avantage d'être implémentés facilement et sans consommer des quantités d'énergie importantes. D'autres types de filtres permettant de distinguer une personne des autres corps occupant des zones chaudes de l'image thermique calibrée peuvent être appliquées à celle-ci. Bien entendu, plusieurs filtres de détection de personnes différents peuvent être appliquées sur l'image thermique calibrée 25 afin d'identifier avec plus de précision les régions d'intérêt 32.

Lorsque aucune image thermique calibrée de comparaison n'est disponible, par exemple lorsque l'imageur thermique vient d'être installé dans l'espace, le procédé 100 peut prévoir l'obtention d'une image thermique calibrée de la scène lorsqu'aucune personne ne se trouve dans celle-ci. Par la suite, on appellera une telle image « image thermique d'arrière-plan ». Cette image thermique d'arrière-plan comprend donc les zones chaudes 22 de la scène qui ne sont pas de régions d'intérêt (par exemple un radiateur) et les zones froides 24, de sorte que l'image thermique d'arrière-plan peut être utilisée comme image thermique calibrée de comparaison. L'étape de comparaison 150 peut alors être mise en oeuvre à partir de l'image thermique calibrée 25 et de l'image thermique d'arrière-plan de la même manière que celle expliquée ci-avant pour l'étape de comparaison 150 mise en oeuvre à partir de l'image thermique calibrée 25 et l'image thermique calibrée de comparaison générée à l'instant t0.

Afin d'obtenir l'image thermique d'arrière-plan, le capteur PIR du détecteur domotique 50 peut être utilisé pour détecter le moment où aucun mouvement n'a lieu dans la scène. En effet, les personnes étant dotées de capacité de mouvement, l'absence de mouvement dans la scène pendant une certaine période de temps, par exemple pendant 2 minutes, indique que potentiellement aucune personne n'y est présente. Ceci permet d'obtenir l'image thermique d'arrière-plan sans aucune région d'intérêt 32. Bien entendu, tout autre capteur permettant de détecter l'absence de personnes dans la scène peut être utilisé.

La soustraction de l'image thermique calibrée 25 et de l'image thermique calibrée de comparaison permet de réduire la charge de calcul au moment de la comparaison 150. Aussi, l'énergie consommée par cette étape de comparaison 150 est réduite, ce qui permet d'accélérer aussi la détection des régions d'intérêt 32.

Alternativement, la comparaison 150 de l'image thermique calibrée et l'image thermique calibrée de comparaison peut comprendre l'identification des régions d'intérêt 32 à partir de la comparaison des positions des régions chaudes 22 et des régions chaudes d'intérêt. Ceci permet d'identifier si l'une des zones chaudes 22 a changé de position pendant le temps écoulé entre l'obtention de l'image thermique calibrée 25 et l'image thermique calibrée de comparaison. Il suffit donc de comparer la position de chaque zone chaude 22 et de la zone chaude de comparaison correspondante. Un changement de position d'une zone chaude 22 par rapport à la zone chaude de comparaison respective indique que cette zone chaude 22 est potentiellement occupée par un corps doté de mouvement, tel qu'une personne. Ainsi, une telle zone chaude 22 correspond potentiellement à une région d'intérêt 32.

L'étape 160 du procédé 100 correspond à l'obtention du nombre de personnes et la position de celles-ci dans l'espace.

A partir de la comparaison 150 des images thermiques calibrée et calibrée de comparaison, le nombre de personnes dans l'espace est obtenu à partir du comptage du nombre de régions d'intérêt 32 identifiées lors de la comparaison 150. De même, l'image thermique calibrée montrant la position dans la scène de chaque zone chaude 22, il est possible de déterminer la position des régions d'intérêt 32 dans cette scène. Ceci permet donc d'obtenir la position des personnes dans l'espace. Selon un exemple, la position des personnes obtenue est exprimée en coordonnées cartésiennes par rapport à un repère orthonormé dont l'origine correspond au centre optique de la lentille 14 de l'imageur thermique 10.

Avantageusement, les étapes 150 et 160 sont réalisées en un temps inférieur à 1 s, de préférence inférieur à 50 ms. Grâce à la simplification des calculs obtenue par la soustraction de l'image thermique calibrée de comparaison à l'image thermique calibrée 25, les étapes 150 et 160 peuvent être réalisées en un temps inférieur ou égal à 20 ms.

Aussi, le procédé 100 selon la présente divulgation peut être mis en oeuvre en totalité en un temps même inférieur à 1 s, ce qui présente des avantages non négligeables en termes de coût, de rapidité et d'énergie consommée par rapport à la technique antérieure.

De préférence, le procédé 100 est répété à des intervalles compris entre 1 min et 4 min, de préférence entre 1 min et 2 min. Pendant le temps compris entre deux applications successives du procédé 100, l'imageur thermique est totalement désactivé, ce qui permet d'économiser de l'énergie.

Dans certains cas, afin de réduire davantage la consommation énergétique, le procédé 100 peut prévoir de s'arrêter avant l'étape 150 de comparaison de l'image thermique calibrée 25 à l'image thermique calibrée de comparaison. De tels cas peuvent avoir lieu par exemple en cas de non détection de zones chaudes 22 ou de régions d'intérêt 32 dans la scène. Ceci permet d'éviter la consommation énergétique liée à l'étape 150 lorsqu'aucune personne n'est dans la scène, tout en garantissant une obtention régulière des images thermiques calibrées 25 qui permet de reprendre la mise en oeuvre complète du procédé 100 rapidement après l'apparition d'une zone chaude 22 dans la scène. Selon une variante, lorsqu'aucune zone chaude 22 n'est détectée pendant un intervalle de temps prolongé, par exemple supérieur à 10 min, le procédé 100 peut être mis en oeuvre en totalité tous les 10 à 20 min, et partiellement tous les 1 à 4 min, de préférence tous le 1 à 2 min. Par « mis en œuvre partiellement » on entend ici que le procédé s'arrête avant l'étape 150, comme expliqué ci-avant.

On note qu'à partir de l'image thermique calibrée 25 obtenue par l'application du procédé 100, on peut obtenir l'image thermique calibrée de comparaison qui peut être utilisée lors d'une mise en œuvre ultérieure du procédé 100. On économise ainsi davantage d'énergie, car il n'est pas nécessaire de prendre des nouvelles images thermiques de la scène pour générer l'image thermique calibrée de comparaison.

Afin d'obtenir l'image thermique calibrée de comparaison à partir de l'image thermique calibrée 25, il suffit de supprimer de l'image thermique calibrée 25 les régions d'intérêt 32, tout en gardant toutes les autres zones chaudes 22.

De préférence, l'image thermique calibrée de comparaison obtenue à partir de la mise en œuvre du procédé 100 est utilisée pour une mise en œuvre du procédé 100 immédiatement postérieure. Ceci permet d'utiliser l'image thermique calibrée de comparaison qui reflète la situation la plus récente dans la scène des zones chaudes 22 qui ne sont pas des régions d'intérêt 32.

Comme indiqué précédemment, les étapes 120 et 140 à 160 sont implémentées pas le dispositif informatique 16, qui peut être intégré ou non dans l'imageur thermique. Avantageusement, les données communiquées à l'extérieur du dispositif informatique 16 sont le nombre de personnes et les coordonnées de la position associée à chacune d'entre elles. Les images thermiques brutes et calibrées ne sont pas transmises à l'extérieur du dispositif informatique 16. Par conséquent, le procédé 100 est en conformité avec les dispositions du Règlement Général sur la Protection des Données (RPDG).

La présente divulgation a également pour objet un programme informatique comportant des instructions pour la mise en œuvre du procédé 100 tel que décrit ci-avant lorsque ce programme est exécuté par un processeur. Le processeur peut être notamment le processeur 18 du dispositif informatique.

La présente divulgation a aussi pour objet un support d'enregistrement non transitoire lisible par un ordinateur sur lequel est enregistré le programme pour la mise en œuvre du procédé décrit ci-avant.

La présente divulgation ne se limite pas aux exemples de procédé, d'imageur thermique, de détecteur domotique, de programme informatique et de support d'enregistrement décrits ci-avant seulement à titre d'exemple, mais elle englobe toutes les variantes que pourra envisager l'homme de l'art dans le cadre de la protection recherchée.

## Revendications

1. Procédé (100) de comptage de personnes et de détermination de la position desdites personnes dans un espace d'un bâtiment, le procédé comprenant les étapes de :
a) activation (110) d'un imageur thermique (10);
b) capture (120) par l'imageur thermique (10) d'une image thermique brute (20) d'une scène comprise dans ledit espace ;
c) désactivation (130) de l'imageur thermique (10) en coupant l'alimentation électrique de l'imageur thermique ;
d) après avoir désactivé l'imageur thermique (10), obtention (140), par un dispositif informatique (16) fonctionnant indépendamment de l'état d'activation ou désactivation de l'imageur thermique, d'une image thermique calibrée (25) de la scène à partir de ladite image thermique brute (20), et d'une mesure de la température de l'imageur thermique lors de la capture de l'image thermique brute, ladite mesure étant effectuée par un capteur de température (60) relié à l'imageur thermique et étant utilisée pour obtenir l'image thermique calibrée, l'image thermique calibrée de la scène comprenant au moins une région d'intérêt (32), chaque région d'intérêt étant une zone chaude (22) correspondant à une personne respective présente dans la scène ;
e) comparaison (150), par le dispositif informatique, de l'image thermique calibrée (25) de la scène à une autre image thermique calibrée de la scène obtenue préalablement, dite image thermique calibrée de comparaison;
f) obtention (160), par le dispositif informatique, du nombre de personnes et la position desdites personnes dans l'espace.

2. Procédé (100) selon la revendication 1, dans lequel l'étape e) comprend la soustraction de l'image thermique calibrée de comparaison à l'image thermique calibrée (25) de la scène de sorte à maintenir dans l'image thermique calibrée (25) de la scène l'au moins une région d'intérêt.

3. Procédé (100) selon la revendication 1 ou la revendication 2, comprenant en outre, préalablement à l'étape e), l'application d'au moins un filtre d'identification de personnes à l'image thermique calibrée (25) de la scène pour identifier l'au moins une région d'intérêt parmi l'au moins une zone chaude (22).

4. Procédé (100) selon l'une des revendications précédentes, dans lequel un temps écoulé entre l'étape a) et l'étape c) est inférieur à 1 s, de préférence inférieur à 50 ms, de préférence encore inférieur ou égal à 20 ms.

5. Procédé (100) selon l'une des revendications précédentes, dans lequel l'image thermique calibrée de comparaison est obtenue entre 1 min et 4 min avant l'étape a), de préférence entre 1 min et 2 min avant l'étape a).

6. Procédé (100) selon l'une des revendications précédentes, dans lequel l'image thermique calibrée (25) de la scène est obtenue sans actionnement d'un obturateur de l'imageur thermique (10).

7. Procédé (100) selon l'une des revendications précédentes, comprenant en outre l'obtention d'une autre image thermique calibrée de comparaison à partir de la soustraction des régions d'intérêt de l'image thermique calibrée (25).

8. Imageur thermique (10), de préférence à basse résolution, comprenant un ensemble de capteurs thermiques (12), une lentille (14) et un dispositif informatique (16) fonctionnant indépendamment de l'état d'activation ou désactivation de l'imageur thermique, l'imageur thermique (10) étant configuré pour mettre en œuvre le procédé (100) selon l'une des revendications précédentes, les étapes d), e) et f) étant mises en œuvre par le dispositif informatique.

9. Détecteur domotique (50) comprenant l'imageur thermique (10) selon la revendication précédente.

## Patentansprüche

1. Verfahren (100) zum Zählen von Personen und zur Bestimmung der Position der Personen in einem Raum eines Gebäudes, das Verfahren umfassend die folgenden Schritte:
a) Aktivierung (110) eines Wärmebildgebers (10);
b) Erfassung (120) eines rohen Wärmebildes (20) einer in dem Raum befindlichen Szene durch den Wärmebildgeber (10);
c) Deaktivierung (130) des Wärmebildgebers (10) durch Unterbrechen der Stromversorgung des Wärmebildgebers;
d) nach Deaktivierung des Wärmebildgebers (10) Erhalten (140) eines kalibrierten Wärmebildes (25) der Szene aus dem rohen Wärmebild (20) durch eine von der Aktivierung oder Deaktivierung des Wärmebildgebers unabhängig arbeitende Recheneinrichtung (16) und einer Messung der Temperatur des Wärmebildgebers bei der Erfassung des rohen Wärmebilds, wobei die Messung durch einen mit dem Wärmebildgeber verbundenen Temperatursensor (60) erfolgt und zum Erhalten des kalibrierten Wärmebilds verwendet wird, wobei das kalibrierte Wärmebild der Szene mindestens einen Bereich von Interesse (32) umfasst, wobei jeder Bereich von Interesse eine heiße Zone (22) ist, die einer jeweiligen in der Szene anwesenden Person entspricht;
e) Vergleich (150) des kalibrierten Wärmebildes (25) der Szene durch die Recheneinrichtung mit einem anderen zuvor erhaltenen kalibrierten Wärmebild der Szene, das als kalibriertes Vergleichs-Wärmebild bezeichnet wird;
f) Erhalten (160) der Anzahl der Personen und der Position dieser Personen in dem Raum durch die Recheneinrichtung.

2. Verfahren (100) nach Anspruch 1, wobei Schritt e) das Subtrahieren des kalibrierten Vergleichs-Wärmebildes von dem kalibrierten Wärmebild (25) der Szene umfasst, um in dem kalibrierten Wärmebild (25) der Szene den mindestens einen Bereich von Interesse beizubehalten.

3. Verfahren (100) nach Anspruch 1 oder Anspruch 2, das zusätzlich vor Schritt e) das Anwenden mindestens eines Personenidentifizierungsfilters auf das kalibrierte Wärmebild (25) der Szene umfasst, um den mindestens einen Bereich von Interesse aus dem mindestens einen heißen Bereich (22) zu identifizieren.

4. Verfahren (100) nach einem der vorhergehenden Ansprüche, wobei eine zwischen Schritt a) und Schritt c) verstrichene Zeit weniger als 1 s, vorzugsweise weniger als 50 ms, vorzugsweise noch weniger als oder gleich 20 ms beträgt.

5. Verfahren (100) nach einem der vorhergehenden Ansprüche, wobei das kalibrierte Vergleichs-Wärmebild zwischen 1 min und 4 min vor Schritt a), vorzugsweise zwischen 1 min und 2 min vor Schritt a), erhalten wird.

6. Verfahren (100) nach einem der vorhergehenden Ansprüche, wobei das kalibrierte Wärmebild (25) der Szene ohne Betätigung eines Verschlusses des Wärmebildgebers (10) erhalten wird.

7. Verfahren (100) nach einem der vorhergehenden Ansprüche, das ferner das Erhalten eines weiteren kalibrierten Vergleichs-Wärmebildes durch Subtrahieren der Bereiche von Interesse aus dem kalibrierten Wärmebild (25) umfasst.

8. Wärmebildgeber (10), vorzugsweise mit niedriger Auflösung, umfassend eine Anordnung von Wärmesensoren (12), eine Linse (14) und eine Recheneinrichtung (16), die unabhängig von dem Aktivierungs- oder Deaktivierungszustand des Wärmebildgebers arbeitet, wobei der Wärmebildgeber (10) zum Durchführen des Verfahrens (100) nach einem der vorhergehenden Ansprüche konfiguriert ist, wobei die Schritte d), e) und f) von der Recheneinrichtung durchgeführt werden.

9. Hausautomationsdetektor (50), umfassend den Wärmebildgeber (10) nach dem vorhergehenden Anspruch.

## Claims

1. Method (100) for counting people and for determining the position of said people in a room of a building, the method comprising the steps of:
a) activating (110) a thermal imager (10);
b) the thermal imager (10) capturing (120) a raw thermal image (20) of a scene included in said room;
c) deactivating (130) the thermal imager (10) by cutting-off the electrical power supply to the thermal imager;
d) after deactivating the thermal imager (10), acquiring (140), by a computer device (16) operating independently of the activation or deactivation state of the thermal imager, a calibrated thermal image (25) of the scene from said raw thermal image (20), and a measurement of the temperature of the thermal imager when capturing the raw thermal image, with said measurement being carried out by a temperature sensor (60) connected to the thermal imager and being used to acquire the calibrated thermal image, the calibrated thermal image of the scene comprising at least one region of interest (32), with each region of interest being a hot spot (22) corresponding to a respective person present in the scene;
e) the computer device comparing (150) the calibrated thermal image (25) of the scene with another calibrated thermal image, called calibrated comparison thermal image, of the scene acquired beforehand;
f) the computer device acquiring (160) the number of people and the position of said people in the room.

2. Method (100) according to Claim 1, wherein step e) comprises subtracting the calibrated comparison thermal image from the calibrated thermal image (25) of the scene so as to maintain the at least one region of interest in the calibrated thermal image (25) of the scene.

3. Method (100) according to Claim 1 or Claim 2, further comprising, prior to step e), applying at least one filter for identifying people to the calibrated thermal image (25) of the scene in order to identify the at least one region of interest from among the at least one hot spot (22).

4. Method (100) according to any of the preceding claims, wherein an elapsed time between step a) and step c) is less than 1 s, preferably less than 50 ms, more preferably less than or equal to 20 ms.

5. Method (100) according to any of the preceding claims, wherein the calibrated comparison thermal image is acquired between 1 min and 4 min before step a), preferably between 1 min and 2 min before step a).

6. Method (100) according to any of the preceding claims, wherein the calibrated thermal image (25) of the scene is acquired without operating a shutter of the thermal imager (10).

7. Method (100) according to any of the preceding claims, further comprising acquiring another calibrated comparison thermal image from the subtraction of the regions of interest from the calibrated thermal image (25).

8. Thermal imager (10), preferably with low resolution, comprising an array (12) of thermal sensors, a lens (14) and a computer device (16) operating independently of the activation or deactivation state of the thermal imager, with the thermal imager (10) being configured to implement the method (100) according to any of the preceding claims, with steps d), e) and f) being implemented by the computer device.

9. Home automation detector (50) comprising the thermal imager (10) according to the preceding claim.
